Europäisches Patentamt

European Patent Office

Office européen des brevets

(11) Numéro de publication: **0 178 543 B1**

# FASCICULE DE BREVET EUROPÉEN

(45) Date de publication de fascicule du brevet:
28.08.91

(51) Int. Cl.5: **B23H 7/04**

(21) Numéro de dépôt: **85112517.9**

(22) Date de dépôt: **03.10.85**

(54) **Procédé pour contrôler la forme d'une surface usinée par un fil à éroder et dispositif pour sa mise en oeuvre.**

(30) Priorité: **16.10.84 CH 4952/84**

(43) Date de publication de la demande:
**23.04.86 Bulletin 86/17**

(45) Mention de la délivrance du brevet:
**28.08.91 Bulletin 91/35**

(84) Etats contractants désignés:
**DE FR GB IT**

(56) Documents cités:
**DE-A- 3 327 470**
**GB-A- 2 055 068**

(73) Titulaire: **CHARMILLES TECHNOLOGIES S.A.**
**rue du Pré-de-la-Fontaine 8-10**
**CH-1242 Satigny(CH)**

(72) Inventeur: **Balleys, François**
**10, Chemin du Bac**
**CH-1213 Petit-Lancy(CH)**

(74) Mandataire: **Blum, Rudolf Emil Ernst et al**
**c/o E. Blum & Co Patentanwälte Vorderberg 11**
**CH-8044 Zürich(CH)**

## Description

Les méthodes connues pour détecter des défauts d'usinage lors d'une découpe par électroérosion d'une pièce au moyen d'un fil consistent à mesurer la déviation du fil par rapport à une droite joignant ses guides soit par une mesure directe de cette déviation entre la pièce et l'un des guides, soit à partir des mouvements relatifs des guides du fil par rapport à la pièce. Cette déviation du fil provoque une erreur de découpe ou un bombage de la surface usinée de la pièce dans le cas d'une phase de finition.

Cependant des défauts d'usinage peuvent aussi apparaître sur la surface usinée même Si le fil est rectiligne entre ses guides. En effet, l'une des causes de ces défauts est l'inégalité de l'état de pollution du diélectrique le long de la zone d'usinage dont l'effet est faire varier la distance d'étincelage entre le fil et la pièce dans le même sens que la pollution. Ces défauts peuvent aussi avoir pour cause des dépôts de matière sur la pièce à certains endroits de la zone d'usinage.

Les méthodes connues sont incapables de détecter de tels défauts et donc de les éliminer par une modification adéquate des conditions d'étincelage.

L'invention a pour but de détecter et de corriger les défauts d'usinage en question. A cet effet, l'invention est définie comme il est dit à la revendication 1.

Ceci permet de modifier les conditions d'étincelage - par exemple par modification de l'injection du diélectrique dans la zone d'étincelage - dès qu'on détecte une différence marquée entre la répartition du nombre de décharges entre les différents secteurs et celles des valeurs de consigne correspondantes. Pour plus de précision, un poids peut être attribué à chaque décharge lors du comptage, en fonction du courant d'usinage consommé lors de cette décharge.

L'invention sera maintenant illustrée plus en détail par la description d'exemples de réalisation qui suit et à l'aide du dessin, dans lequel

la fig. 1 montre une déviation d'un fil due à son avance lors d'une découpe ainsi que le principe du comptage des décharges,

la fig. 2 montre un évasement de la fente de découpe dû à un flux non optimal du diélectrique,

les fig. 3 et 4 montrent deux autres formes que peut prendre la fente d'usinage par suite d'une concentration inégale des déchets d'usinage dans la zone d'étincelage,

la fig. 5 montre un schéma de principe d'une installation de découpage avec détection des défauts d'usinage, et

la fig. 6 montre un schéma fonctionnel.

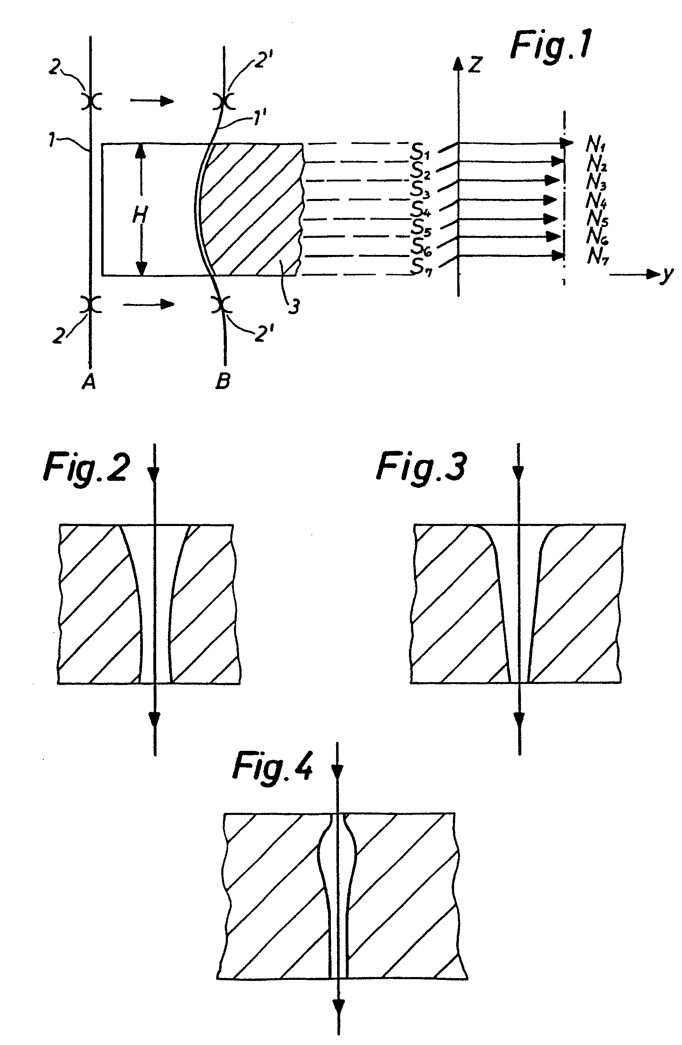

La figure 1 illustre un cas simple, où le fil de découpe 1 tendu entre les guides 2 s'est déplacé de A en B lors de la découpe d'une pièce 3 d'épaisseur H. Le mouvement d'avance du fil par rapport à la pièce 3, ainsi que les différentes forces attractives et répulsives agissant sur le fil lors de l'étincelage font qu'une fois arrivé en B, le fil (désigné alors par 1') au lieu d'être rectiligne entre ses guides (désignés à ce moment par 2') présentera une courbure qui traîne derrière la droite joignant les guides, ce qui aura pour conséquence un défaut d'usinage si la trajectoire de découpe dans un plan normal à cette droite décrit une courbe marquée à cet endroit. On supposera maintenant la hauteur H de la pièce divisée en huit secteurs - ou tranches - $S_1$ à $S_8$, comme esquissé dans la moitié droite de la fig. 1. Dans cette partie de la figure l'axe Z représente une coordonnée parallèle à la droite joignant les guides 2 et l'axe Y une coordonnée le long de laquelle est reporté le nombre $N_i$ de décharges détectées dans chacun des huit secteurs depuis le début de l'usinage. Si l'on suppose pour simplifier que la valeur du courant d'usinage - et par conséquent la quantité de matière érodée - est restée la même pour toutes les décharges, alors la quantité de matière enlevée dans chaque secteur $S_i$ sera proportionnelle au nombre $N_i$ de décharges effectuées dans ce secteur. Les différences entre chacun de ces nombres $N_i$ et les valeurs de référence $R_i$, qui dans le cas le plus simple peuvent être la moyenne $\overline{N}$ de tous les $N_i$, permettent de déterminer la forme que prend le fil en B, si le comptage est effectué à partir d'un instant où le fil est rectiligne, p.e. lorsqu'il se trouve en A. Si l'on sait que la fente créée par le fil est souvent évasée dans sa partie haute - comme indiqué dans la fig. 2 - on pourra p.e. multiplier les nombres $N_i$ correspondant à la partie supérieure de la fente par des facteurs appropriés (inférieurs à 1) pour obtenir des nombres corrigés $N_i'$ essentiellement proportionnels à la distance de travail parcourue par le fil dans chacune des tranches $S_i$ correspondantes depuis le début du comptage et évaluer ainsi l'importance de la flèche du fil. Alternativement il est naturellement possible d'ajuster non pas les nombres $N_i$ mais les nombres de référence $R_i$.

De manière similaire, si l'on désire tenir compte de ce que les décharges transportent des quantités de courant qui diffèrent selon les conditions d'étincelage et érodent par conséquent une quantité de matière qui varie selon les cas, on pourra attribuer à chaque décharge un poids équivalent à cette quantité de matière - déterminée à partir d'une mesure du courant d'usinage - et remplacer le nombre des décharges dans chaque secteur obtenu par simple comptage par sa valeur pondérée.

Lorsque la comparaison des nombres obtenus pour chaque secteur par comptage des décharges, ou en faisant la somme de leurs valeurs pondérées avec leurs valeurs de consigne, révèle un décalage trop important entre au moins certaines valeurs observées et les valeurs de consigne correspondantes, ceci déclenchera soit un signal d'alarme, soit certains processus automatiques de correction pouvant comporter un réglage de l'injection de diélectrique dans la zone d'étincelage, ou un ralentissement de l'avance du découpage, ou toute autre mesure appropriée.

La méthode décrite jusqu'ici pour déceler la courbure du fil dans le cas de la fig. 1 s'applique de façon similaire à la détection des défauts géométriques d'usinage illustrés par les figures 2 à 4, où le plan du dessin (qui dans la fig. 1 est situé dans le plan de découpe) est normal au plan de découpe. Par analogie avec ce qui a été dit plus haut, l'estimation de l'ampleur des défauts des fig. 2 à 4 pourra être rendue particulièrement précise si l'on évalue le défaut de courbure de la fig. 1 au moyen d'une méthode connue et que l'on se sert ensuite de cette estimation pour pondérer le nombre des décharges dans les divers secteurs. Toutefois ceci n'est pas indispensable, car en régime stable les divers secteurs du fil avancent à la même vitesse, et toute variation d'un secteur à l'autre du nombre de décharges par unité de temps correspond donc à des différences dans l'érosion latérale, c'est-à-dire à des variations de la largeur de la fente de découpe telles celles illustrées par les figures 2 à 4.

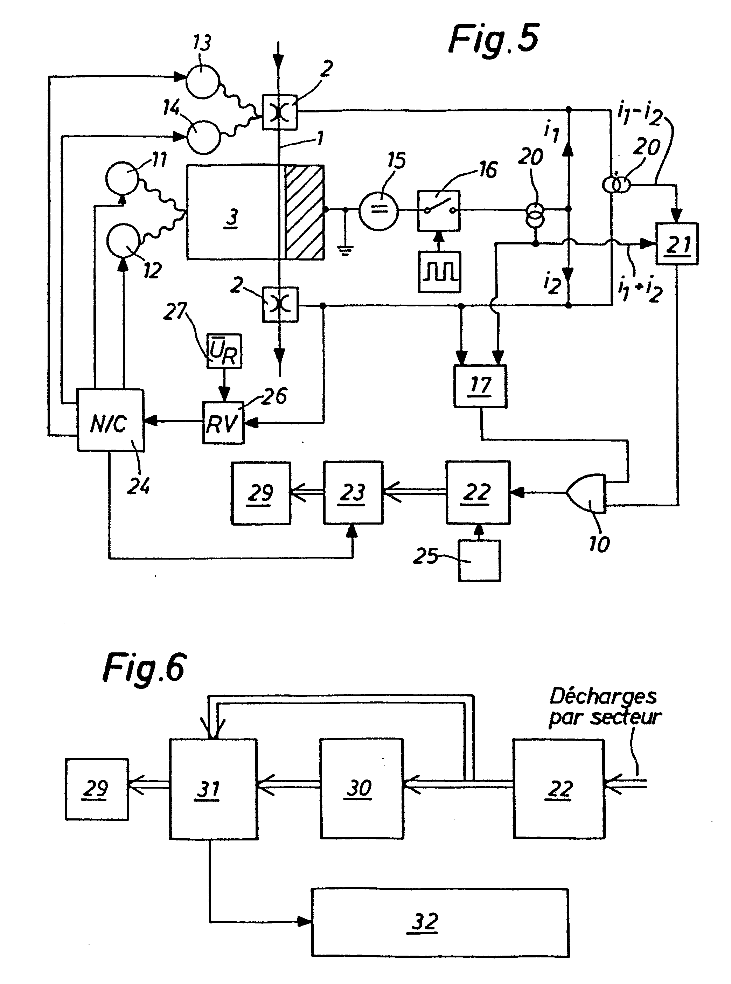

Le schéma de principe de la fig. 5, qui représente une installation de découpage par fil comprenant un circuit de détection des défauts géométriques d'usinage sera maintenant brièvement décrit. La pièce 3 est découpée par le fil 1 tendu sur des guides 2. Deux moteurs 11 & 12 commandent les déplacements de la pièce à usiner parallèlement au plan de découpe, et deux autres moteurs 13 et 14 commandent les déplacements d'un guide 2 par rapport à l'autre et par conséquent l'orientation du fil par rapport à la pièce. L'installation comporte un circuit générateur d'impulsions qui comprend une source de tension 15 en série avec un interrupteur 16 commandé par un oscillateur.

La position de chaque décharge en direction longitudinale du fil est mesurée par un circuit de détection de type connu indiqué par les éléments 20 et 21. Le circuit 21 calcule le rapport de l'écart entre les courants circulant dans les deux lignes d'alimentation du fil et la somme de ces courants. Cet écart ($i_1 - i_2$) est mesuré par un conducteur shuntant ces deux branches; le quotient obtenu est comparé à des valeurs représentatives de chaque secteur du fil, et le circuit 21 émet un signal logique dès que la valeur du quotient correspond à une de ces branches.

Le signal ainsi obtenu est amené à une porte ET 10. Un circuit discriminateur 17 de type connu émet un signal logique dès qu'apparaît une décharge érosive, éliminant ainsi l'effet d'éventuelles décharges sans action érosive, telles que les court-circuits qui apparaissent inévitable-ment dans certaines conditions. On sait que ces derniers sont caractérisés par des courants élevés, mais avec des chutes de tension très faibles par rapport aux tensions usuelles d'étincelle. Il en résulte de faibles échauffements localisés sans enlèvement de matière. C'est pourquoi le circuit de discrimination 17 doit être capable de reconnaître un court-circuit et de ne pas émettre de signal logique dans un tel cas. Si l'on envisage de classer les décharges érosives selon leur intensité, afin de pondérer leur influence lors du comptage, le circuit 17 pourrait le cas échéant servir à effectuer cette pondération. Le signal de sortie du circuit 17 commande la porte ET 10 pour faire passer lors de chaque décharge érosive un signal dans un compteur correspondant à la partie du fil où cette décharge s'est produite. Les compteurs nécessaires à cet enregistrement sont compris dans une unité de comptage par secteur 22 qui reçoit en outre les signaux émis par une horloge 25. Les valeurs des nombres de décharges par unité de temps dans les différentes parties, ou secteurs, du fil sont transmises de l'unité de comptage 22 à une unité de traitement de données 23 qui peut soit contenir des valeurs de consigne prédéterminées pour les nombres de décharges par unité de temps, soit calculer des valeurs de consigne à partir des informations qu'elle reçoit de l'unité de comptage 22. L'unité de traitement de données 23 effectue en outre les comparaisons nécessaires pour déterminer si les écarts entre les valeurs du nombre de décharges effectives et les valeurs de consigne excèdent un niveau prédéterminé. Ces comparaisons peuvent tenir compte de signaux caractérisant les déplacements relatifs du fil et de la pièce, ces signaux étant délivrés au circuit de traitement de données 23 par un circuit de commande numérique 24 qui commande les moteurs 11 à 14. Comme il est d'usage, le circuit de commande 24 reçoit lui-même des signaux émis par un régulateur de vitesse 26 réglant le gap par modification de la vitesse d'avance du fil en fonction de l'écart entre la tension effective d'usinage et une tension de référence $\overline{U}_R$ délivrée par une source de tension 27. Un dispositif d'affichage 29 reçoit et affiche les informations élaborées par l'unité de traitement 23.

Un mode d'utilisation particulière du schéma de la fig. 5 consiste non pas à évaluer les défauts géométriques, mais à surveiller les accumulations momentanées de décharges érosives dans un quelconque secteur du fil. Ces phénomènes accidentels provoquent des échauffements locaux qui peuvent affaiblir le fil et entraîner sa rupture. L'intérêt de comparer le comptage de décharges érosives dans chaque secteur avec une série correspondante de valeurs de référence à ne pas dépasser est qu'il est possible d'adopter des valeurs élevées pour les secteurs au voisinage du plan supérieur et du plan inférieur de la pièce, là où le fil est bien refroidi par la proximité immédiate d'une buse coaxiale d'injection du diélectrique. Les buses d'injection du diélectrique ne sont pas représentées sur la fig. 5, mais elles se situeraient entre chaque guide 2 et la pièce 3. En revanche, dans le voisinage du plan à mi-hauteur, là où les jets des buses ne parviennent qu'avec difficultés par suite de l'étroitesse de la fente d'usinage, il convient d'adopter des valeurs de référence relativement faibles. Il est bien entendu que si la comparaison des comptages de décharges et des valeurs de référence à ne pas dépasser révèle une situation dangereuse, ceci déclenche soit un signal d'alarme, soit certains processus automatiques de correction pouvant comporter une augmentation de l'injection du diélectrique, un ralentissement de l'avance du découpage, en toute mesure appropriée. Il est même possible de faire coopérer un circuit de surveillance des défauts géométriques avec un circuit de surveillance des échauffements locaux.

Finalement, la fig. 6 montre le schéma fonctionnel d'une forme de réalisation du circuit servant à traiter les données fournies par l'unité 22. Ce circuit comporte un premier calculateur 30 déterminant la valeur moyenne de l'ensemble des décharges produites dans tous les secteurs du fil ainsi qu'un second calculateur 31 pour déterminer les écarts entre cette valeur moyenne et les valeurs du nombre de décharges dans chaque secteur. Les signaux de sortie du second calculateur commandent d'une part le dispositif d'affichage (et éventuellement d'alarme) 29 et d'autre part des circuits 32 agissant sur les paramètres d'usinage et d'injection pour réduire ou éliminer les défauts détectés.

## Revendications

1. Procédé pour contrôler la forme d'une surface découpée par décharges érosives dans une pièce-électrode au moyen d'un fil-électrode (1) tendu et défilant entre deux guides (2), caractérisé en ce qu'il consiste à diviser la partie active du fil (1) en plusieurs secteurs ($S_i$) puis à détecter pour chaque décharge érosive dans lequel elle se produit, à compter le nombre de décharges ($N_i$) produites dans chaque secteur ($S_i$) pendant un laps de temps déterminé et à émettre un signal représentatif des écarts entre chacun de ces nombres ($N_i$) et une valeur de consigne correspondante ($R_i$), afin de contrôler les conditions d'usinage de façon à réduire cet écart.

2. Procédé selon la revendication 1, caractérisé en ce que toutes les valeurs de consigne ($R_i$) sont égales à la valeur moyenne ($\overline{N}$) des nombres ($N_i$) de décharges par secteur.

3. Procédé selon la revendication 1, caractérisé en ce que le comptage des décharges érosives se fait à partir d'un instant où le fil se trouve par rapport à la pièce dans une position pour laquelle il n'y a pas d'étincelage.

4. Dispositif pour la mise en oeuvre du procédé selon la revendication 1 comportant un circuit de mesure (20,21) de l'endroit du fil où se produit chaque décharge, caractérisé en ce qu'il comporte un circuit de détection (20,21) des décharges érosives, des circuits de comptage (22) associés aux circuits de mesure et de détection (20,21) et un circuit de calcul (23) associé aux circuits de comptage (22) pour élaborer un signal représentatif des écarts entre les nombres élaborés par les circuits de comptage (22) et leur valeur de consigne correspondante.

5. Dispositif selon la revendication 4, caractérisé en ce que le circuit de calcul (23) comporte une unité de calcul (30) de la valeur moyenne ($\overline{N}$) des nombres ($N_i$) de décharges produites dans chaque secteur.

## Claims

1. Method for controlling the shape of a surface which is being machined by electroerosion in a workpiece serving as an electrode through the agency of a taut wire electrode (1) which runs between two guides (2), characterized in that one divides the active part of the wire (1) into several sections ($S_i$), that one detects in which section each erosive discharge occurs, that one determines the number ($N_i$) of discharges which occur in each section ($S_i$) during a given time interval, and that one generates a signal which represents the difference between each number ($N_i$) and an associated rated value ($R_i$), in order to control the machining conditions so as to reduce this difference.

2. Method according to claim 1, characterized in that all rated values ($R_i$) are equal to the average value ($\overline{N}$) of the numbers ($N_i$) of discharges in each section.

3. Method according to claim 1, characterized in that the number of erosive discharges is counted from an instant in time where the relative position of the wire in relation to the workpiece is such that no sparking takes place.

4. Device for performing the method of claim 1 with a measuring circuit (20, 21) for determining at which position along the wire each discharge takes place, characterized in that it comprises a circuit (20, 21) for detecting the erosive discharges, counting circuits (22) associated with the measuring and detecting circuits (20, 21), and a calculating circuit (23) associated with the counting circuits (22) in order to generate a signal which represents the differences between the numbers generated by the counting circuits (22) and their corresponding rated value.

5. Device according to claim 4, characterized in that the calculating circuit (23) comprises a unit (30) which calculates the average value ($\overline{N}$) of the numbers ($N_i$) of discharges in each section.

**Patentansprüche**

1. Verfahren, um die Form einer mittels Funkenerosion durch einen zwischen zwei Trägern (2) gespannten und ablaufenden Elektrodendraht (1) ausgeschnittenen Fläche eines als Elektrode dienenden Werkstückes zu bestimmen, dadurch gekennzeichnet, dass man den aktiven Teil des Drahtes (1) in mehrere Abschnitte ($S_i$) einteilt und den Abschnitt feststellt, in dem jede erodierende Entladung stattfindet, dass man die Anzahl ($N_i$) der im Verlauf einer bestimmten Zeitdauer in jedem Abschnitt ($S_i$) stattfindenden Entladungen zählt, und dass man ein für die Abweichung zwischen jeder dieser Zahlen ($N_i$) und einem entsprechenden Sollwert ($R_i$) charakteristisches Signal erzeugt, um die Verarbeitungsbedingungen so zu steuern, dass diese Abweichung verringert wird.

2. Verfahren nach Anspruch 1, dadurch gekennzeichnet, dass alle Sollwerte ($R_i$) gleich dem Mittelwert ($\overline{N}$) über die Anzahlen ($N_i$) von Entladungen in den einzelnen Abschnitten sind.

3. Verfahren nach Anspruch 1, dadurch gekennzeichnet, dass die Zählung der erodierenden Entladungen zu einem Zeitpunkt beginnt, zu welchem die relative Lage vom Draht und Werkstück so ist, dass keine Funken auftreten.

4. Vorrichtung zur Durchführung des Verfahrens nach Anspruch 1, mit einem Messkreis (20, 21), um zu bestimmen, an welcher Stelle des Drahtes jede Entladung stattfindet, dadurch gekennzeichnet, dass sie eine Schaltung (20, 21) zur Bestimmung der erodierenden Entladungen, mit den Mess- und Bestimmungs-Schaltungen (20, 21) zusammenwirkenden Zählschaltungen (22), sowie eine mit diesen zusammenwirkende Rechenschaltung (23) zum Erzeugen eines Signals, welches die Abweichung zwischen den durch die Zählschaltungen (22) erzeugten Zahlen und den entsprechenden Sollwerten darstellt, aufweist.

5. Vorrichtung nach Anspruch 4, dadurch gekennzeichnet, dass die Rechenschaltung (23) eine Recheneinheit (30) zur Bestimmung des Mittelwertes ($\overline{N}$) der in jedem Abschnitt erzeugten Anzahl ($N_i$) von Entladungen aufweist.

# Fig.1

# Fig.2

# Fig.3

# Fig.4

Fig.5

Fig.6